# EUROPÄISCHE PATENTSCHRIFT

(11) **EP 2 625 437 B1**
(45) Veröffentlichungstag und Bekanntmachung des Hinweises auf die Patenterteilung: **28.12.2016**
(21) Anmeldenummer: 11729309.2
(22) Anmeldetag: 04.07.2011
(51) Int. Cl.: F16C 41/04

(54) **SELBSTHALTENDES KEGELROLLENLAGER**
SELF-ARRESTING TAPERED ROLLER BEARING
ROULEMENT À ROULEAUX CONIQUES À AUTO-ENTRETIEN

(30) Priorität: 08.10.2010 DE 102010047983
(43) Veröffentlichungstag der Anmeldung: 14.08.2013
(73) Patentinhaber: Schaeffler Technologies AG & Co. KG, 91074 Herzogenaurach (DE)
(72) Erfinder: KOLB, Bernd, 97464 Niederwerrn (DE); HEUBERGER, Robert, 97422 Schweinfurt (DE)
(86) Internationale Anmeldenummer: PCT/EP2011/061209
(87) Internationale Veröffentlichungsnummer: WO 2012/045491

(56) Entgegenhaltungen:
- EP-A2- 0 126 607
- EP-A2- 1 033 504
- WO-A2-02/20284
- DE-A1- 19 526 167
- DE-A1-102010 033 823
- US-A- 5 757 084
- US-A1- 2003 094 849
- US-A1- 2005 232 528
- US-A1- 2006 029 314
- US-A1- 2008 193 067
- US-A1- 2010 074 569

## Beschreibung

### Gebiet der Erfindung

Die Erfindung betrifft ein LWK-Radlager betehend aus zwei Kegelrollenlager mit je einem Außenring, mit einem Innenring und mit in einem Käfig geführten, auf einer Innenlaufbahn des Außenrings und auf einer Außenlaufbahn des Innenrings abrollbaren lasttragenden Kegelrollen, wobei ein Abstandselement zur Sicherung einer relativen Axialposition des Innenrings in Bezug zu einem anderen Lagerring vorgesehen ist.

### Stand der Technik

### Hintergrund der Erfindung

Aus US 5,757,084 A ist ein zweireihiges Kegelrollenlager für Nutzkraftfahrzeuge bekannt. Das Kegelrollenlager besteht aus zwei separaten einreihigen Kegelrollenlagern, die beide in eine Radnabe eingepresst und anschließend auf einem Achszapfen befestigt werden. Die Kegelrollenlager werden durch das Anziehen einer Spannschraube auf dem Achszapfen gegeneinander verspannt, um die für den Wälzlagerbetrieb notwendige Vorspannung zu erzielen.

Bevor dies geschehen kann, wird flanschseitig ein Halteelement auf die Radnabe geschraubt, welches den Innenring des flanschseitigen Kegelrollenlagers axial fixiert. Ferner wird eine Installationshülse temporär innerhalb des Innenrings des verlagsseitigen Kegelrollenlagers angeordnet. Die Instal-lationshülse liegt gleichzeitig im Abstandselement ein, welches zur axialen Abstandshaltung zum benachbarten Innenrings vorgesehen ist. In diesem Zustand kann die Radlagereinheit zusammen mit der Radnabe auf den Achszapfen aufgeschoben werden, wobei durch die Installationshülse verhindert wird, dass der Achszapfen auf eine axiale Fläche des radsseitigen Innenrings trifft und ferner durch Platzhalterelemente verhindert wird, dass der radseitige Innenring axial aus der Radnabe gedrückt wird.

Diese vergleichsweise aufwändige Installation wird aufgrund des notwendigen Abstandselementes zwischen den beiden Innenringen in Kauf genommen. Das Abstandselement ist im genannten Stand der Technik als Abstandshülse ausgebildet, wobei diese aus zylindrischen, als auch konischen Anteilen bestehen kann. Dadurch ist es möglich Kegelrollenlager gegeneinander anzustellen, die unterschiedliche Teilkreisdurchmesser aufweisen. Während des Installationsvorganges wird die Installationshülse vom Achszapfen axial aus der Radlagereinheit herausgedrückt und entfernt, beziehungsweise bei einer weiteren Installation wiederverwendet.

Nachteilig an der beschriebenen Installation des Radlagers auf dem Achszapfen ist die Vielzahl der Installationsschritte, die die Verwendung des beschriebenen Radlagers aufwändig machen und insbesondere hohe Personalkosten verursachen.

Aus der US 2005/ 0232528 A1 ist ein doppelreihiges Kegelrollenlager bekannt, welches einen Abstandsring aufweist. Der Abstandsring ist zwischen den beiden Innenringen der Kegelrollen angeordnet und dient zur Einstellung der axialen Vorspannung der Kegelrollen.

Die US 2008/ 0193067 A1 offenbart ein Kegelrollenlager mit einem Abstandsring. Der Abstandsring weist eine Oberfläche auf, welche als Führungsfläche für den Käfig des Kegelrollenlagers dient.

### Aufgabenstellung

### Zusammenfassung der Erfindung

Die Aufgabe der Erfindung besteht darin, ein Kegelrollenlager anzugeben, welches kostengünstig zu installieren ist und/oder weniger Hilfsmittel für die Installation erfordert.

Die Aufgabe wird gelöst durch ein Kegelrollenlager mit einem Außenring, mit einem Innenring und mit in einem Käfig geführten, auf einer Innenlaufbahn des Außenrings und auf einer Außenlaufbahn des Innenrings abrollbaren Kegelrollen, wobei ein Abstandelement zur Sicherung einer relativen Axialposition des Innenrings in Bezug zu einem anderen Lagerring vorgesehen ist, wobei der Käfig oder der Innenring zur Haltung des Abstandselements während der Installation des Kegelrollenlagers vorgesehen ist, wobei das Abstandselement als ein Abstandsring ausgebildet ist, wobei der Abstandsring einen ringförmigen Anteil aufweist, der radial außen und radial innen zylindrische Fortsätze aufweist, wobei die zylindrischen Fortsätze an den Außenring und an den Innenring anschlagen.

Der Käfig oder der Innenring ist zur Haltung des Abstandselements während der Installation des Kegelrollenlager vorgesehen. Damit wird erreicht, dass das Abstandselement nicht durch eine Installationshülse während der Installation gehalten werden muss. Somit entfällt die Installationshülse als Installationsmittel und mit ihr der zugehörige Installationsschritt, bei dem die Installationshülse angeordnet werden muss. Das Abstandselement muss vor dem Aufziehen auf den Achszapfen lediglich mit dem Innenring oder dem Wälzlagerkäfig verbunden sein, bevor sie Installation auf dem Achszapfen erfolgen kann.

Das erfindungsgemäße Kegelrollenlager hat einen Außenring, einen Innenring und in einem Käfig geführte, auf einer Innenlaufbahn des Außenrings und auf einer Außenlaufbahn des Innenrings abrollbare Kegelrollen. Ein Abstandselement ist zur Sicherung einer relativen Axialposition des Innenrings in Bezug zu einem anderen Lagerring vorgesehen. Der Innenring ist dazu vorgesehen auf einem Achszapfen befestigt zu werden. Entsprechendes gilt für den Außenringe, der in eine Radnabe einpressbar ist und zusammen mit der Radnabe gegenüber dem Innenring des Kegelrollenlagers drehbar gelagert wird. Dabei fungieren die Kegelrollen als lasttragende Wälzkörper.

Die Funktion des Abstandselementes, welches als Abstandsring ausgeführt ist, besteht darin, den Innenring in Bezug zu einem anderen Lagerring axial zu beabstanden, womit eine gewünschte Vorspannung des Kegelrollenlagers erreicht wird. Der andere Lagerring kann beispielsweise ein lasttragender Wälzlagerring eines anderen Wälzlagers oder der Außenring des Kegelrollenlagers sein. Alternativ kann auch ein anderer Ring, der keine Aufstandkräfte aufnehmen muss, als anderer Lagerring vorgesehen sein.

Erfindungsgemäß ist vorgesehen, dass das Abstandselement während der Installation des Kegelrollenlagers durch den Käfig oder den Innenring desselben gehalten wird. Durch die Verbindung zwischen dem Abstandselement und den Käfig beziehungsweise den Innenring geht die Funktionen der Installationshülse auf Bestandteile des Kegelrollenlager über, die dadurch sowohl eine oder mehrere Funktionen für den Wälzlagerbetrieb, als auch eine temporäre Funktion zur Installationsunterstützung des Kegelrollenlager innehaben.

Ferner ist nicht ausgeschlossen, dass sowohl der Käfig als auch der Innenring zur Haltung des Abstandselement während der Installation vorgesehen sind. Obwohl der Käfig als auch der Innenring für eine Haltung des Abstandselement in axialer und/oder radialer Richtung zu Rotationsachse geeignet sind, ist es dennoch vorteilhaft den Käfig insbesondere für eine radiale Haltung und den Innenring für eine axiale Haltung des Abstandselementes vorzusehen. Der Grund hierfür ist darin zu suchen, dass das Abstandselement axial neben den Innenringen angeordnet wird, beziehungsweise leicht von den Käfig radial umfasst werden kann.

Bei einer vorteilhaften Ausführungsform ist der Käfig oder der Innenring kraftschlüssig oder formschlüssig mit dem Abstandselement verbunden. Es ist möglich den Käfig in axialer oder radialer Richtung kraftschlüssig mit dem Abstandselement zu verbinden. Dazu muss das Abstandselement die entsprechende zylindrische beziehungsweise ringförmige Anlagefläche zur Verfügung stellen. Die einfachste Ausführungsform besteht aus einem im wesentlichen zylindrischen Abstandselement, welches folglich eine zylindrische Außenfläche aufweist, mit welcher ein Kraftschluss mit einer zylindrischen Innenfläche gemäß Käfig hergestellt werden kann. Somit besteht in axialer Richtung ein Kraftschluss und in radialer Richtung ein Formschluss, der das Abstandselement an seiner vorgesehenen Position axial neben den Innenring hält.

Alternativ oder zusätzlich kann der Innenring kraft- oder formschlüssig mit dem Abstandselement verbunden werden. Bei einem Kraftschluss sind das Abstandselement und der Innenring dazu vorgesehen ineinander gesteckt zu werden, das heißt, beide weisen zylindrische Oberflächen auf, die bei eingesteckter Verbindung aufgrund eines negativen Spiels fest aufeinander liegen. Ein Formschluss hingegen ist beispielsweise durch Haken erzielbar, wobei jeweils ein Haken am Innenring beziehungsweise am Abstandselement ausgebildet ist und die Haken ineinandergreifen können, insbesondere miteinander verschnappen können.

Vorteilhafterweise ist ein Formschluss auch mittels eines Sicherungsringes herstellbar, der jeweils formschlüssig das Abstandselement mit dem Innenring, beziehungsweise mit dem Käfig verbindet. Ein derartiger Sicherungsring kann beispielsweise in Umfangsrichtung unterbrochen sein, so dass sich dieser zum Einrasten in den Formschluss zunächst aufweiten lässt und anschließend einschnappen kann. Die Form des Sicherungsringes sollte einen Hintergriff am Innenring und am Abstandselement unterstützen.

Bei einer vorteilhaften Ausführungsform ist der andere Lagerring entweder der Außenring, der Innenring eines anderen Wälzlagers oder ein anderer Abstandsring oder Abstandshülse. Maßgeblich ist, dass sich das Abstandselement an einem weiteren Element innerhalb der Wälzlagernanordnung oder an einem benachbarten Bauteil im Umfeld abstützen kann, um so die optimale Platzierung des Innenrings zu gewährleisten. Dies ist insbesondere dann wichtig, wenn das Kegelrollenlager gegebenenfalls zusammen mit weiteren Wälzlagern verspannt werden soll, sodass optimale Betriebskonditionen für den Wälzlagerbetrieb herrschen.

Bei einer vorteilhaften Ausführungsform weist der Käfig einen radialen Fortsatz auf, der in einer radialen Ausnehmung des Innenrings oder des Außenring geführt wird. Hierdurch wird es möglich eine Haltung des Innenrings hervorzurufen, die für den Transport des Kegelrollenlager Vorteile birgt. Da das Abstandselement als Referenz verwendbar ist, besteht lediglich die Gefahr, dass der Innenring beim Transport (beispielsweise bei einer Verbindung zwischen Käfig und Abstandselement, beziehungsweise fehlender Verbindung zwischen Innenring und Abstandselement) sich von den Kegelrollen trennt und damit den Wälzlagerinnenraum derart exponiert, dass dieser für Fremdpartikel und Schmutz zugänglich wird.

Somit wäre es möglich das Kegelrollenlager als so genanntes Insert-Lager auszuführen, welches eine werkseitige Vormontage, eingeschlossen der Befettung, und vor Ort eine Installation des Kegelrollenlagers als Ganzes erlaubt. Der Eingriff des Käfigs in einer radialen Ausnehmung des Innenrings führt zumindest zu einem axialen Formschluss, womit ein selbsthaltendes Kegelrollenlager realisiert wird. Unter einem selbsthaltenden Kegelrollenlager wird ein Kegelrollenlager verstanden, dessen Bestandteile unverlierbar miteinander verbunden sind. Die Unverlierbarkeit der Bestandteile bei InsertLagern ermöglicht neben der Befettung im Rahmen der Vormontage auch den Verkauf der vormontierten Einheit an den Endkunden, da die Endmontage lediglich aus dem Einpressvorgang des vormontierten Kegelrollenlagers im Ganzen besteht.

Der radiale Fortsatz in der Form eines Zapfens muss nicht in Umfangsrichtung ausgedehnt sein, sondern kann durchaus an einzelnen Stellen in Umfangsrichtung ausgebildet sein. Dabei kann ein Zapfen genügen, wobei eine Mehrzahl von Zapfen, die gegebenenfalls in Umfangsrichtung einen ausreichenden Abstand zueinander aufweisen, zu einer größeren Verliersicherheit führt.

Der radiale Fortsatz in Form eines Ringes kann in Umfangsrichtung durchgängig oder unterbrochen sein, wobei der radiale Fortsatz gegebenenfalls weitere Funktionen, wie zum Beispiel bei der Schmierstoffumverteilung oder zur Dichtung übernehmen kann.

Vorteilhafterweise läuft der radiale Fortsatz innerhalb einer Nut, wobei es zweckdienlich ist im vormontierten Zustand in der Art in die Nut einzugreifen, dass eine optimale axiale Haltung des Innenrings umgesetzt werden kann. Dabei kann es sein, dass der Wälzlagerkäfig innerhalb der Nut an einer ringförmigen Fläche, die von den Wälzkörper an abgewandt ist, aufgrund einer geringen Beaufschlagung anliegt. Dies führt im Hinblick auf den Betrieb des Wälzlagers zu einem Kraftschluss zwischen dem Käfig und dem feststehenden Innenring. Dieser Kraftschluss ist jedoch derart gering, dass dieser durch einen geringfügigen Materialabrieb bei Inbetriebnahme des Kegelrollenlagers aufgehoben wird. Mit anderen Worten, der Käfig läuft sich im Laufe des ordnungsgemäßen Betriebes frei.

Alternativ wird die radiale Ausnehmung nicht als Nut, sondern wenigstens aus einer ringförmigen und einer zylindrischen Fläche gebildet. Bei einer derartigen Ausgestaltung bietet es sich an den Fortsatz elastisch auszubilden, um eine Verschnappung des Käfigs in der Nut zu realisieren und auf diese Weise die notwendige axiale Haltefunktion zu erzielen.

Bei einer vorteilhaften Ausführungsform ist der Außenring in einem Transportring angeordnet oder enthalten. Der Transportring soll das Kegelrollenlager handhabbar und transportierbar machen, indem weitere Bestandteile des Kegelrollenlagers, wie zum Beispiel eine Dichtungsanordnung so lange vom Transportring gehalten werden können, bis das Kegelrollenlager in einer Radnabe beziehungsweise auf einem Achszapfen montiert wird. Vorteilhafterweise kann das Kegelrollenlager zusammen mit weiteren Wälzlagern, insbesondere Kegelrollenlager, innerhalb dieses Transportrings angeordnet werden, so dass eine mehrreihige Wälzlageranordnung als InsertLagereinheit entsteht. Somit ist es möglich die Wälzlager innerhalb des Transportring derart einander anzuordnen, wie sie auch eingepresst werden sollen, wobei der Transportring entweder zeitweise die haltende Rolle der Radnabe übernimmt oder alternativ zusammen mit den Wälzlagern in die Radnabe eingepresst wird.

Bei einer vorteilhaften Ausführungsform ist ein erstes erfindungsgemäßes Kegelrollenlager und ein zweites Wälzlager, insbesondere Kegelrollenlager, derart zueinander angeordnet, dass das Abstandselement während der Installation der beiden Wälzlager nicht nur von den Innenringen, beziehungsweise von dem Käfig des ersten Kegelrollenlager gehalten wird, sondern auch den Innenring des zweiten Wälzlagers hält. Somit ist auf sehr vorteilhafte Weise eine zweireihige Wälzlageranordnung umgesetzt, wobei die Bestandteile der beiden Wälzlager, insbesondere der beiden Kegelrollenlager, innerhalb eines Transportringes unverlierbar miteinander verbunden sind und bereits bei der Vormontage befettet werden können. Vorteilhafterweise kann der Transportring dazu vorgesehen sein zusammen mit der Wälzlageranordnung in einer Radnabe eingepresst zu werden. Damit ist es möglich den Transportring auch mit Funktionen zu versehen, die für den Wälzlagerbetrieb eingesetzt werden können. Beispielsweise können Mittel vorgesehen werden, die eine axiale Fixierung wenigstens eines Außenringens der beteiligten Wälzlager herbeizuführen. Dazu kann an der Innenseite des Transportrings ein axialer Anschlag vorgesehen sein oder eine innenseitig umlaufende Nut zur Anordnung eines axialen Sicherungsringes angebracht sein.

Weitere vorteilhafte Ausbildungen und bevorzugte Weiterbildungen der Erfindung sind der Figurenbeschreibung und/oder den Unteransprüchen zu entnehmen.

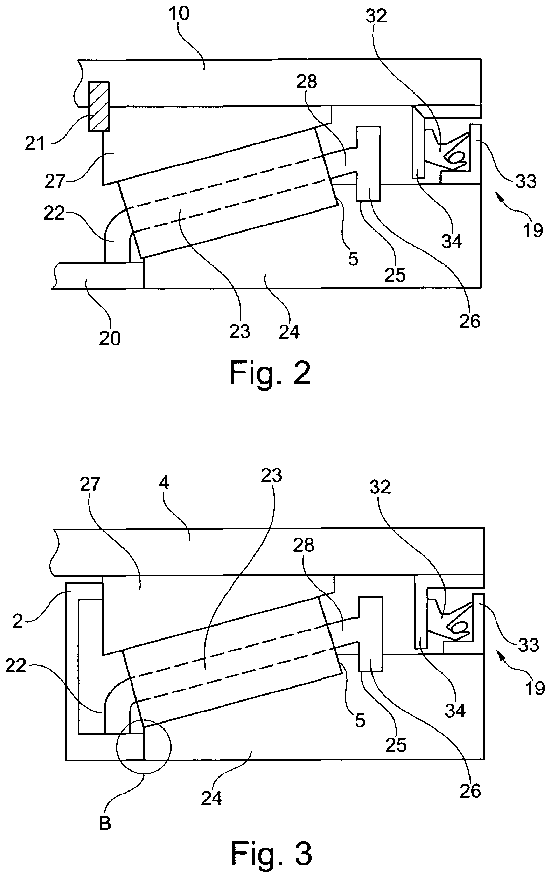

Im Folgenden wird die Erfindung anhand des im Figur 3 dargestellten Ausführungsbeispiels näher beschrieben und erläutert.

Die in den Figuren 1, 2 und 4-8 dargestellten Ausführungsbeispiele sind nicht Teil der Erfindung. Es zeigen:
- Fig. 1: ein erstes zweireihiges Kegelrollenlager in Insert-Bauweise mit einpressbarem Transportring,
- Fig. 2: das fahrzeugseitige Kegelrollenlager aus Fig. 1,
- Fig. 3: ein erfindungsgemäßes einreihiges Kegelrollenlager in Insert-Bauweise und Transportring,
- Fig. 4: ein zweites zweireihiges Kegelrollenlager in Insert-Bauweise mit Transportring,
- Fig. 5: eine erste Ausführungsmöglichkeit des ersten Verbindungsbereichs,
- Fig. 6: eine zweite Ausführungsmöglichkeit des ersten Verbindungsbereichs,
- Fig. 7: eine dritte Ausführungsmöglichkeit des ersten Verbindungsbereichs, und
- Fig. 8: das zweite zweireihige Kegelrollenlager aus Fig. 4 im eingebauten Zustand.

### Ausführungsbeispiel

### Beschreibung der Zeichnungen

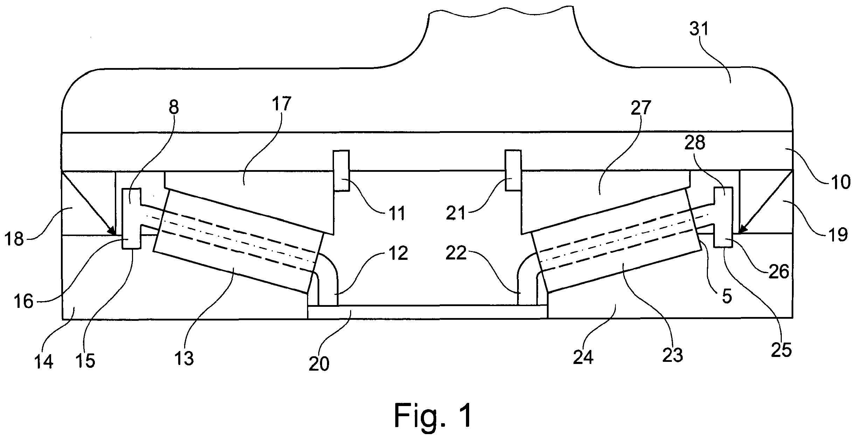

Fig. 1 zeigt ein erstes zweireihiges Kegelrollenlager in Insert-Bauweise mit einpressbarem Transportring 10.

Die gezeigte Wälzlageranordnung ist innerhalb einer drehbaren Radnabe 31 angeordnet und ist bei der Installation zusammen mit dem Transportring 10 in dieser ein gepresst worden. Dies erleichtert den ersten Installationsschritt insofern, dass das mehrteilige, zweireihiges Kegelrollenlager als vormontiertes Radlager in die Radnabe 31 als Ganzes einpressbar ist. Bei diesem Einpressvorgang entstehen lediglich Einpresskräfte am Transportring 10.

Die Lagerbestandteile sind derart angeordnet, dass sie sich vor dem Einpressen in die Radnabe 31 und auch danach gegenseitig zusammenhalten. Der radseitige Außenring 17 ist mittels eines Sicherungsringes 11 in Richtung des Fahrzeuges axial gesichert. Aufgrund ihrer Form sind die Kegelrollen 13 durch den Außenring 17 ebenfalls in die gleiche Richtung gesichert.

Bei einem herkömmlichen Kegelrollenlager gibt es in die Gegenrichtung (in diesem Fall in radseitiger Richtung) keine axiale Sicherung. Im Ausführungsbeispiel der Fig. 1 werden jedoch im Gegensatz zum Stand der Technik die Kegelrollen 13 durch den Wälzlagerkäfig 8 und der Wälzlagerkäfig 8 wiederum durch einen Kraftschluss mit dem Abstandselement 20 axial in radseitiger Richtung gesichert. Dazu weist der radiale Fortsatz 12 einen genügend kleinen Innenradius auf, um einen Kraftschluss auf der zylindrischen Außenfläche des Abstandselement 20, welches hier als Abstandsbüchse 20 ausgeführt ist, herbeizuführen. Die Vormontage dieses Kraftschlusses kann dadurch erleichtert werden, indem für den Wälzlagerkäfig 8 ein entsprechend elastisches Material vorgesehen wird, so dass mit einem akzeptablen Kraftaufwand der Kraftschluss zwischen Wälzlagerkäfig 8 und Abstandselement 20 herstellbar ist.

Auf der Fahrzeugseite der Wälzkörperanordnung wird der dortige Wälzlagerkäfig 22 in der gleichen Weise kraftschlüssig mit dem Abstandselement 20 axial gesichert. Aufgrund der axialen Sicherung des Außenringes 27 durch den Sicherungsringe 21 sind nun insgesamt die Außenringe 17,27, die Wälzkörper 13,23 und deren Käfige 12,22 axial in beide Richtungen gesichert.

Des Weiteren wird durch den Hintergriff des Wälzlagerkäfigs 8 mittels seines radialen Fortsatzes 16 in der umlaufenden Nut 15 gegen eine Verschiebung des Innenringes 14 insbesondere in radseitiger Richtung gesichert. Eine Sicherung in die Gegenrichtung findet bereits durch die Wälzkörper 13 oder gegebenenfalls ebenso durch den radialen Fortsatz 16 in der Nut 15 statt. Durch die beidseitige Axialsicherung wird verhindert, dass durch eine axiale Verschiebung des Innenrings 14 gegenüber dem Transportring 10 eine radiale Dichtlippe der Dichtungsanordnung 18 von der ihr zugeordneten Dichtfläche abrutscht oder sogar umgeklappt. In einem solchen Fall könnte die Dichtungsanordnung nicht mehr optimal funktionieren, was zu einem frühzeitigen Ausfall der Radlagereinheit führen würde. Somit wird durch die axiale Sicherung des Innenrings 14 die Dichtungsanordnung 18 nachhaltig geschützt.

Aufgrund der spiegelsymmetrischen Bauweise des zweiseitigen Radlagers ist die axiale Sicherung in entsprechender Weise für den fahrzeugseitigen Außenring 27, dessen Kegelrollen 23, den Wälzlagerkäfig 28, den Innenring 24 und auch für die Dichtungsanordnung 19 realisiert. Lediglich das Abstandselement 20 nimmt eine Sonderstellung ein, da es eine gegenseitige axiale Sicherung der beiden Käfige 8,28 zueinander ermöglicht.

Fig. 2 zeigt das fahrzeugseitige Kegelrollenlager aus Fig. 1.Die Ausführungen zu den indizierten Bauteilen aus Figur 1 gelten entsprechend. Beachtlich ist, dass zwischen dem Abstandselement 20 und dem Innenring 24 keine Verbindungsmittel eingesetzt werden, sondern lediglich durch den Kraftschluss zwischen dem radialen Fortsatz 22 des Wälzlagerkäfigs 28 am Abstandselement 20 in Kombination mit dessen Hintergriff durch den radialen Fortsatz 26 in der Nut 25 des Innenrings 24 wird es möglich den Innenring 24 und das Abstandselement 20 axial zusammenzuhalten.

Des weiteren ist ein Elastomer 32 an einem Träger 34 befestigt, die sich beide zusammen mit dem Transportring 10 und der nicht abgebildeten Radnabe drehen können. Eine radiale Dichtlippe, die auf einer zylindrischen Außenflächen des Außenbereichs 33 angeordnet ist, würde im Falle einer axialen Verschiebung des Innenrings 24 dazu führen, dass die radiale Dichtlippe sich auf den Innenring 24 abrutscht. Wird der Innenring 24 dann wieder an die vorgesehene Stelle gebracht, so besteht die Gefahr, dass die radiale Dichtlippe nach unten, das heißt, unter den radialen Teil des Trägers 34 umklappt.

Fig. 3 zeigt ein erfindungsgemäßes einreihiges Kegelrollenlager in InsertBauweise mit Transportring 4.

Das Abstandselement ist in diesem Ausführungsbeispiel als Abstandsring 2 ausgeführt, der den axialen Abstand zwischen dem Außenring 27 und dem Innenring 24 maßgeblich mitbestimmt. Der Abstandring 2 weist einen ringförmigen Anteil auf, der radial außen und radial innen jeweils einen zylindrischen Fortsatz aufweist, wobei die zylindrischen Fortsätze dazu vorgesehen sind jeweils an den Außenring 27 und an den Innenring 24 anzuschlagen.

Während des Wälzlagerbetriebs laufen die sich gegenseitig verliersicher haltenden Bestandteile des Kegelrollenlager frei. So zum Beispiel der radiale Fortsatz 26, der in der Nut 25 an einer axialen Seitenfläche, die dem Bord 5 zugewandt ist, anliegt. An dieser Stelle findet ein Materialabrieb statt, wodurch genügend Freiraum zwischen der axialen Seitenfläche und dem radialen Fortsatz entsteht und keine unnötige mehr Reibung erzeugt wird. Entsprechendes gilt für den Kraftschluss zwischen dem radialen Fortsatz 22 und dem Abstand zu dem Abstandsring 2. Auch hier kann der Materialabrieb während der ersten Umdrehungen bei der Inbetriebnahme für eine Aufhebung des Kraftschlusses sorgen. Insgesamt ist es daher sinnvoll den Wälzlagerkäfig 28 aus einem Material herzustellen, das weicher ist, als der Wälzlagerstahl des Ringes 24 und auch weicher ist, als das Material des Halteringes 2. Dafür eignet sich beispielsweise ein Kunststoff, der auf einfache Weise gespritzt werden kann, um den Wälzlagerkäfig 28 mit den radialen Fortsätzen 22, 26 auszubilden. Alternativ ist es denkbar auch den Abstandsring 2 aus Kunststoff zu fertigen, der jedoch eine größere Härte aufweisen muss. Auch andere harte Materialien bilden eine Alternative, wie zum Beispiel Metall. Eine besonders kostengünstige Lösung des Abstandsring 2 stellt ein kaltumgeformtes Blechteil dar.

Aufgrund des Kraftschlusses zwischen dem radialen Fortsatz 22 des Wälzlagerkäfigs 28 mit dem radial innenliegenden zylindrischen Fortsatz des Abstandsrings 2, wird der Abstandring 2 am Kegelrollenlager festgehalten. Der Abstandsring 2 kann neben seiner Haltefunktion, beziehungsweise axialen Abstandshaltung zwischen dem Außenring 27 und den Innenring 24 noch eine andere axiale Sicherungsfunktion übernehmen, nämlich das Kegelrollenlager axial gegen ein, gegebenenfalls baugleiches symmetrisches, weiteres Kegelrollenlager abzustützen. Dabei liegen die jeweiligen Halteringe der beiden Kegelrollenlager mit ihrer axialen Außenfläche aneinander.

Vorteilhafterweise ist der Außenring 27 mit denen Transportring 24 ausgeführt, so dass weniger Bauteile notwendig sind. Alternativ kann jedoch in der gezeigten, zweiteiligen Ausführung weniger (teurer) Wälzlagerstahl für den Außenring 27 aufgewendet werden.

Das gezeigte Insert-Kegelrollenlager ist vormontierbar und kann vom Hersteller ohne weiteres im vormontierten Zustand verkauft werden, da die Endmontage im Vergleich zu üblichen Wälzlagerinstallationen wenige Gefahren für die Lebensdauer des Kegelrollenlagers birgt.

Für alle nicht genannten Bezugszeichen wird auf die Ausführungen zu Fig. 2 verwiesen.

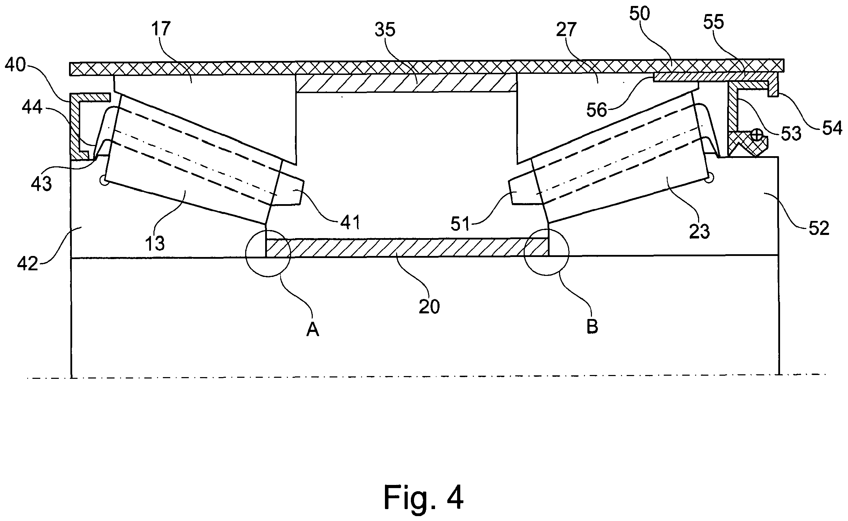

Fig. 4 zeigt ein zweites zweireihiges Kegelrollenlager in Insert-Bauweise mit Transportring 50. Der Transportring 50 L. den Außenring 17, den Abstandhalter 35 und den Außenring 27 genau in der gleichen Axialenanordnungen, wie es auch beim Wälzlagerbetrieb erforderlich ist. Jedoch erlaubt der Transportring 50 eine leichte Handhabe des zweiseitigen Kegelrollenlagers, da dieses vormontiert ist und der Wälzraum durch ein Fettstaublech 40 und fahrzeugseitig mit einem Dichtring 53 abgedichtet ist. Damit muss bei der Verpackung des zweiseitigen Kegelrollenlager in Insert-Bauweise keine besondere Rücksicht auf den Schutz der Einzelkomponenten genommen werden, da das zweireihige Kegelrollenlager die für den Wälzlagerbetrieb vorgesehenen Schutzmechanismen (insbesondere Dichtungsanordnungen) bereits während des Transports nutzen kann.

Vorteilhafterweise erlaubt der Transportring 50 ein leichtes Einpressen des zweiseitigen Kegelrollenlagers nach einer radialen Zentrierung, wobei der Transportring 50 nicht innerhalb der Nabe verbleibt, sondern vielmehr den gleichen Innendurchmesser wie diese aufweist, womit durch den entsprechenden Presssitz die Außenringe 17,27 und der Abstandhalter 35 radial sowie axial gehalten werden.

Bei den Wälzlagerkäfigen 41,51 handelt es sich um so genannte Schnappkäfige, die zur Außenseite des zweiseitigen Kegelrollenlagers hin einen radialen Fortsatz 44 aufweisen, der zur Verschnappung mit dem jeweiligen Innenring 42,52 dient. Der radiale, elastische Fortsatz 44 am radseitiger Ende des Kegelrollenlager liegt beispielsweise axial an der ringförmigen Axialfläche 43 des Innenrings 42 an. Aufgrund der Schnappfunktion ist es möglich bei der Vorinstallation die Taschen der Käfige 41,51 mit den Wälzkörpern 13,23 zu befüllen und anschließend auf den jeweiligen Innenring 42,52 aufzuschnappen.

Aufgrund des Hintergriffs der Innenringe 14,24, 42,52 durch die Wälzlagerkäfige 8,28, 41,51 in Ausführungsbeispielen der Figuren 1 und 4 ist es möglich an den Innenringen 14,24, 42,52 lediglich einen äußeren Bord 5 vorzusehen. Innenseitig ist kein Bord notwendig, da die Wälzkörper 13,23 von ihren jeweiligen Käfigen 8,28 axial gehalten werden. Dadurch wird die Fertigung der Innenringe 14,24, 42,52 stark vereinfacht, wobei eine zusätzliche Komplexität an den Wälzlagerkäfigen 8,28, 41,51 entsteht, die jedoch aufgrund sehr fortgeschrittener Kunststoffspritzverfahren an dieser Stelle leicht umsetzbar ist (radiale Fortsätze 16,26, 44). Ein weiterer Vorteil besteht darin, das die inneren radialen Fortsätze 12,22 keinen Innenringbord umgreifen müssen, womit axial Bauraum eingespart wird.

Das Abstandselement 20 ist als Hülse ausgeführt, die axial formschlüssig mit den Innenringen 42,53 im ersten Verbindungsbereich A beziehungsweise im zweiten Verbindungsbereich B verbunden wird. Somit sind im vormontierten Zustand alle Komponenten des Kegelrollenlager fest zueinander angeordnet, womit beim Transport sowie bei der Endmontage, die das Einpressen in die Radnabe und das Aufsetzen auf den Achszapfen beinhaltet, keine Maßnahmen zum Schutz des Lagerinnenraumes erforderlich sind.

Die Abstandselemente 2,20 der Ausführungsbeispiele der Figuren 1 und 4 können als hohlzylindrische Hülsen ausgeführt werden, jedoch können sie auch unterschiedliche Innen- und Außenradien aufweisen, so ist es denkbar, das beispielsweise Abschnitte der Abstandselemente 2,20 konisch, sphärisch, parabolisch oder auf ähnliche Weise ausgebildet sind.

Das Verlängerungsblech 54 ist mittels des Befestigungsstücks 55 am Außenring 27 mittels eines Presssitzes in der Ausnehmung 56 befestigt. Das Verlängerungsblech 54 dient bei der axialen Einkreisung in die Radnabe als axialer Abstandhalter und kann handelsübliche Kassettendichtungen oder andere Dichtungsanordnung in aufnehmen.

Radseitig ist ein Fettstaublech 40 angeordnet, welches für Low-Cost-Varianten des Kegelrollenlager einsetzbar ist und durch eine Verengung der axialen Öffnung zwischen dem Innenring 42 und den Transportring 50, beziehungsweise der Radnabe dient. Das austretende Fett ist dazu vorgesehen Schmutzpartikel von innen nach außen zu schwemmen. Ein derartiges Fettstaublech 40 ist dann ausreichend, falls außerhalb des Kegelrollenlager einer Dichtungsanordnung vorgesehen ist, oder ein früherer Ausfall des Kegelrollenlagers in Kauf genommen wird. Grundsätzlich kann jedoch anstatt des Fettstaublechs 40 auch ein Dichtring 53, wie es auf der Fahrzeugseite des Kegelrollenlager angeordnet ist, verwendet werden, sofern dies erforderlich ist.

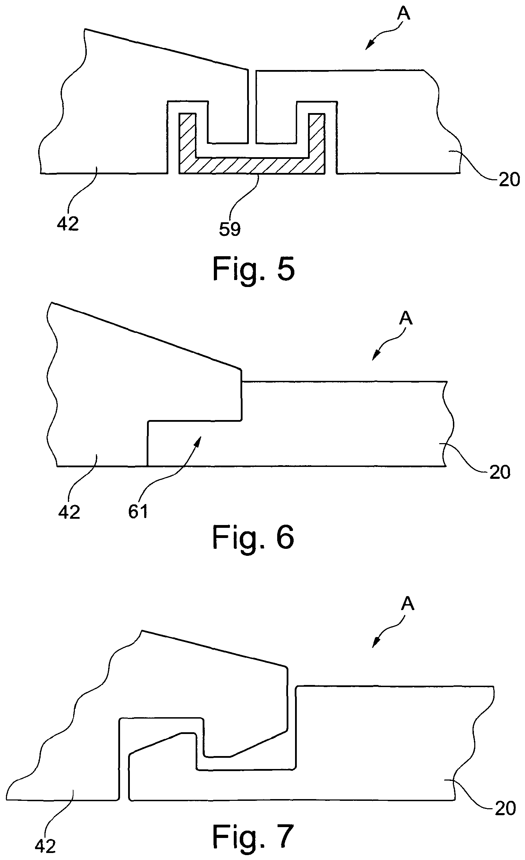

Die Ausführungsmöglichkeiten zum Formschluss im ersten Verbindungsbereich A und im zweiten Verbindungsbereich B ist in den folgenden Figuren 5-7 dargestellt.

Fig. 5, 6 und 7 zeigen eine erste, zweite und dritte Ausführungsmöglichkeit des ersten Verbindungsbereichs A. Der zweite Verbindungsbereich B kann entsprechend wie der erste Verbindungsbereich A ausgebildet sein, wobei das Abstandselement 20 und der Innenring 52 axial eine andere Reihenfolge ausbilden als der Innenring 42 mit dem Abstandselement 20.

Der Sicherungsring 59, der das Abstandselement 20 mit dem Innenring 42 formschlüssig verbindet, weist den Längsrichtung Rotationsachse des Kegelrollenlager eine U-Form auf, wobei die jeweiligen ringförmigen Schenkel des Sicherungsringes 59 den Innenring 42, beziehungsweise das Abstandselement 20, in einer Nut hintergreift. Vorteilhafterweise ist ein derartiger Sicherungsring 59 einmal in Umfangsrichtung unterbrochen, so dass die Anbringung des Sicherungsringes 59 über eine kurzzeitige elastische Beanspruchung in radialer Richtung vollzogen werden kann.

Sind die Verbindungsbereiche mit einem Sicherungsring 59 versehen, so weist das zweireihige Kegelrollenlager den Vorteil auf bei einer Deinstallation nicht auseinanderzufallen. Dies ist dann von Vorteil, wenn nachträglich eine Schadensanalyse durchzuführen ist, oder das zweireihige Kegelrollenlager nochmals eingesetzt werden soll, ohne den empfindlichen Innenraum des Wälzlagers zu exponieren.

Alternativ zum Formschluss kann auch eine kraftschlüssigen Steckverbindung 61 zwischen dem Innenring 42 und dem Abstandselement 20 umgesetzt werden, indem jeweils zylindrische Flächen vorgesehen werden, die aufgrund eines geringfügigen negativen Spiels einen Presssitz realisieren, der stark genug ist, um das zweireihiges Kegelrollenlager verliersicher zusammenzuhalten. Diese Art der Steckverbindung 61 ist vermutlich die kostengünstigste Variante, die jedoch dazu führt, das bei einer Deinstallation des Kegelrollenlagers dieses auseinanderfällt.

Vorteilhafterweise sind sowohl am Innenring 42, als auch am Abstandselement 20 mehrere Haken in Umfangsrichtung vorgesehen, beziehungsweise ein in Umfangsrichtung ununterbrochenes hakenartiges Verbindungselement angeformt, welches jeweils das Gegenstück zum anderen Verbindungselement bildet. Durch einfaches Aufschieben kann der Formschluss hergestellt werden.

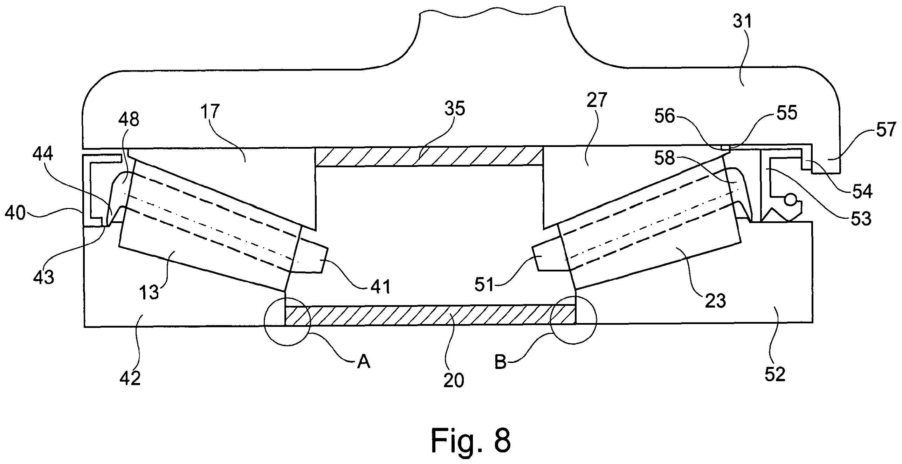

Fig. 8 zeigt das zweite zweireihige Kegelrollenlager aus Fig. 4 im eingebauten Zustand innerhalb einer Radnabe 31 aus Gußeisen, die dank ihrer radialen Verengung 57 einen Axialanschlag für das Verlängerungsblech 52 aufweist, um eine axiale Positionierung des Insert-Radlagers zu erreichen.
Für alle nicht genannten Bezugszeichen sei auf die Ausführungen zu Fig. 4 verwiesen.

Zusammenfassend betrifft die Erfindung ein Kegelrollenlager mit einem Außenring, mit einem Innenring und mit in einem Käfig geführten, auf einer Innenlaufbahn des Außenrings und auf einer Außenlaufbahn des Innenrings abrollbaren Kegelrollen, wobei ein Abstandselement zur Sicherung einer relativen Axialposition des Innenrings in Bezug zu einem anderen Lagerring vorgesehen ist. Es wird eine Lehre angegeben, wie eine einfachere Installation des Kegelrollenlagers ermöglicht werden kann, indem Komponenten, die zum permanenten Verbleib im Kegelrollenlager bestimmt sind, auch Funktionen bei der Herstellung der Verliersicherheit übernehmen und somit herkömmliche Installationsschritte und Hilfsmittel obsolet machen.

**Bezugszeichenliste**

| | | | |
|---|---|---|---|
| A | Erster Verbindungsbereich | B | Eweiter Verbindungsbereich |
| 2 | Abstandsring | 4 | Transportring |
| 5 | Bord | 8 | Käfig |
| 10 | Transportring | 11 | Sicherungsringe |
| 12 | Käfig | 13 | Kegelrolle |
| 14 | radseitiger Innenring | 15 | Nut |
| 16 | Radialer Fortsatz | 17 | Radseitiger Außenring |
| 18 | Dichtungsanordnung | 19 | Dichtungsanordnung |
| 20 | Abstandselement | 21 | Sicherungsring |
| 22 | Käfig | 23 | Kegelrolle |
| 24 | Fahrzeugseitiger Innenring | 25 | Nut |
| 26 | Radialer Fortsatz | 27 | Außenring |
| 28 | Käfig | 31 | Radnabe |
| 32 | Elastomer | 33 | Außenblech |
| 34 | Träger | 35 | Abstandhalter |
| 40 | Fettstaublech | 41 | Käfig |
| 42 | Radseitiger Innenring | 43 | Ringförmige Axialfläche |
| 44 | Radialer Fortsatz | 50 | Transportring |
| 51 | Käfig | 52 | Fahrzeugseitiger Innenring |
| 53 | Dichtring | 54 | Verlängerungsblech |
| 55 | Befestigungsstück | 56 | Ausnehmung |
| 57 | Radiale Verengung | 58 | Radialer Fortsatz |
| 59 | Sicherungsring | 61 | Steckverbindung |

## Patentansprüche

1. Kegelrollenlager mit einem Außenring (17,27), mit einem Innenring (14,24, 42,52) und mit in einem Käfig (8,28,48,58) geführten, auf einer Innenlaufbahn des Außenrings (17,27) und auf einer Außenlaufbahn des Innenrings (12,24, 42,52) abrollbaren Kegelrollen (13,23), wobei ein Abstandelement (2,20) zur Sicherung einer relativen Axialposition des Innenrings (14,24,42,52) in Bezug zu einem anderen Lagerring (14,17,24,27,42,52) vorgesehen ist, wobei der Käfig (8,28,48,58) oder der Innenring (12,24,42,52) zur Haltung des Abstandselements (2,20) während der Installation des Kegelrollenlagers vorgesehen ist, **dadurch gekennzeichnet, dass** das Abstandselement (2, 20) als ein Abstandsring (2) ausgebildet ist, wobei der Abstandsring (2) einen ringförmigen Anteil aufweist, der radial außen und radial innen zylindrische Fortsätze aufweist, wobei die zylindrischen Fortsätze an den Außenring (27) und an den Innenring (24) anschlagen.

2. Kegelrollenlager nach Anspruch 1, wobei der Käfig (8,28,48,58) oder der Innenring (14,24,42,52) kraftschlüssig oder formschlüssig mit dem Abstandselement (2,20) verbunden ist.

3. Kegelrollenlager nach nach Anspruch 2, wobei der Formschluss durch ineinandergreifende Haken oder mittels eines Sicherungsringes (59) herstellbar ist.

4. Kegelrollenlager nach einem der vorhergehenden Ansprüche, wobei der andere Lagerring (14,17,24,27,42,52) der Außenring (17,27), ein Innenring (14,42) eines anderen Wälzlagers oder ein anderes Abstandselement ist.

5. Kegelrollenlager nach einem der vorhergehenden Ansprüche, wobei der Käfig (8,28,48,58) wenigstens einen radialen Fortsatz (16,26,44) aufweist und der Fortsatz (16,26,44) in einer radialen Ausnehmung (15,25,43) des Innenrings (14,24, 42,52) oder des Außenring (17,27) geführt wird.

6. Kegelrollenlager nach Anspruch 5, wobei der radiale Fortsatz (16,26,44) eine Zapfenform oder eine Ringform aufweist.

7. Kegelrollenlager nach Anspruch 6, wobei die radiale Ausnehmung (15,25) durch eine Nut (15,25), oder wenigstens aus einer ringförmigen und einer zylindrischen Fläche gebildet wird.

8. Kegelrollenlager nach einem der vorhergehenden Ansprüche, wobei der Außenring (17,27) in einem Transportring (4,10, 50) angeordnet ist.

9. Wälzlageranordnung mit einem ersten Kegelrollenlager nach einem der vorhergehenden Ansprüche und einem zweiten Wälzlager, insbesondere Kegelrollenlager, wobei der andere Lagerring (14,42) der Innenring (14,42) des zweiten Wälzlagers ist und der andere Lagerring (14,42) vom Abstandselement (2,20) oder von dem Wälzlagerkäfig (12,41) des anderen Wälzlagers während der Installation der beiden Wälzlager gehalten wird.

10. Wälzlageranordnung nach Anspruch 9, wobei ein die Wälzlager enthaltender Transportring (10,50) dazu vorgesehen ist, zusammen mit der Wälzlageranordnung in eine Radnabe (31) eingepresst zu werden.

## Claims

1. Tapered roller bearing having an outer ring (17, 27), having an inner ring (14, 24, 42, 52) and having tapered rollers (13, 23) which are guided in a cage (8, 28, 48, 58) and can roll on an inner raceway of the outer ring (17, 27) and on an outer raceway of the inner ring (12, 24, 42, 52), a spacer element (2, 20) being provided for securing a relative axial position of the inner ring (14, 24, 42, 52) in relation to another bearing ring (14, 17, 24, 27, 42, 52), the cage (8, 28, 48, 58) or the inner ring (12, 24, 42, 52) being provided for holding the spacer element (2, 20) during the installation of the tapered roller bearing, **characterized in that** the spacer element (2, 20) is configured as a spacer ring (2), the spacer ring (2) having an annular portion which has cylindrical projections radially on the outside and radially on the inside, the cylindrical projections bearing against the outer ring (27) and against the inner ring (24).

2. Tapered roller bearing according to Claim 1, the cage (8, 28, 48, 58) or the inner ring (14, 24, 42, 52) being connected to the spacer element (2, 20) in a nonpositive or positively locking manner.

3. Tapered roller bearing according to Claim 2, it being possible for the positively locking connection to be produced by way of hooks which engage into one another or by means of a securing ring (59).

4. Tapered roller bearing according to one of the preceding claims, the other bearing ring (14, 17, 24, 27, 42, 52) being the outer ring (17, 27), an inner ring (14, 42) of another anti-friction bearing, or another spacer element.

5. Tapered roller bearing according to one of the preceding claims, the cage (8, 28, 48, 58) having at least one radial projection (16, 26, 44), and the projection (16, 26, 44) being guided in a radial recess (15, 25, 43) of the inner ring (14, 24, 42, 52) or of the outer ring (17, 27).

6. Tapered roller bearing according to Claim 5, the radial projection (16, 26, 44) having a pin shape or an annular shape.

7. Tapered roller bearing according to Claim 6, the radial recess (15, 25) being formed by way of a groove (15, 25), or at least from an annular and a cylindrical surface.

8. Tapered roller bearing according to one of the preceding claims, the outer ring (17, 27) being arranged in a transport ring (4, 10, 50).

9. Anti-friction bearing arrangement having a first tapered roller bearing according to one of the preceding claims and a second anti-friction bearing, in particular a tapered roller bearing, the other bearing ring (14, 42) being the inner ring (14, 42) of the second anti-friction bearing, and the other bearing ring (14, 42) being held by the spacer element (2, 20) or by the anti-friction bearing cage (12, 41) of the other anti-friction bearing during the installation of the two anti-friction bearings.

10. Anti-friction bearing arrangement according to Claim 9, a transport ring (10, 50) which contains the anti-friction bearings being provided for being pressed into a wheel hub (31) together with the anti-friction bearing arrangement.

## Revendications

1. Palier à rouleaux coniques comprenant une bague extérieure (17, 27), une bague intérieure (14, 24, 42, 52) et des rouleaux coniques (13, 23) guidés dans une cage (8, 28, 48, 58), pouvant rouler sur un chemin de roulement intérieur de la bague extérieure (17, 27) et sur un chemin de roulement extérieur de la bague intérieure (12, 24, 42, 52), un élément d'espacement (2, 20) étant prévu pour fixer une position axiale relative de la bague intérieure (14, 24, 42, 52) par rapport à une autre bague de palier (14, 17, 24, 27, 42, 52), la cage (8, 28, 48, 58) ou la bague intérieure (12, 24, 42, 52) étant prévue pour retenir l'élément d'espacement (2, 20) pendant l'installation du palier à rouleaux coniques, **caractérisé en ce que** l'élément d'espacement (2, 20) est réalisé sous forme dé bague d'espacement (2), la bague d'espacement (2) présentant une portion annulaire qui présente des saillies cylindriques radialement à l'extérieur et radialement à l'intérieur, les saillies cylindriques butant contre la bague extérieure (27) et contre la bague intérieure (24).

2. Palier à rouleaux coniques selon la revendication 1, dans lequel la cage (8, 28, 48, 58) ou la bague intérieure (14, 24, 42, 52) est connectée par engagement par force ou par engagement par correspondance de formes à l'élément d'espacement (2, 20).

3. Palier à rouleaux coniques selon la revendication 2, dans lequel l'engagement par correspondance de formes peut être réalisé par des crochets s'engageant les uns dans les autres ou au moyen d'une bague de fixation (59).

4. Palier à rouleaux coniques selon l'une quelconque des revendications précédentes, dans lequel l'autre bague de palier (14, 17, 24, 27, 42, 52) est la bague extérieure (17, 27), une bague intérieure (14, 42) d'un autre palier à roulement ou un autre élément d'espacement.

5. Palier à rouleaux coniques selon l'une quelconque des revendications précédentes, dans lequel la cage (8, 28, 48, 58) présente au moins une saillie radiale (16, 26, 44) et la saillie (16, 26, 44) est guidée dans un évidement radial (15, 25, 43) de la bague intérieure (14, 24, 42, 52) ou de la bague extérieure (17, 27).

6. Palier à rouleaux coniques selon la revendication 5, dans lequel la saillie radiale (16, 26, 44) présente une forme de tourillon ou une forme annulaire.

7. Palier à rouleaux coniques selon la revendication 6, dans lequel l'évidement radial (15, 25) est formé par une rainure (15, 25) ou au moins à partir d'une surface de forme annulaire et d'une surface cylindrique.

8. Palier à rouleaux coniques selon l'une quelconque des revendications précédentes, dans lequel la bague extérieure (17, 27) est disposée dans une bague de transport (4, 10, 50).

9. Agencement de palier à roulement comprenant un premier palier à rouleaux coniques selon l'une quelconque des revendications précédentes et un deuxième palier à roulement, en particulier un palier à rouleaux coniques, l'autre bague de palier (14, 42) étant la bague intérieure (14, 42) du deuxième palier à roulement et l'autre bague de palier (14, 42) étant maintenue par l'élément d'espacement (2, 20) ou par la cage de palier à roulement (12, 41) de l'autre palier à roulement pendant l'installation des deux paliers à roulement.

10. Agencement de palier à roulement selon la revendication 9, dans lequel une bague de transport (10, 50) contenant les paliers à roulement est prévue pour être pressée conjointement avec l'agencement de palier à roulement dans un moyeu de roue (31).
